Europäisches Patentamt

European Patent Office

Office européen des brevets

(19)

(11) Veröffentlichungsnummer: **0 238 935 B1**

# EUROPÄISCHE PATENTSCHRIFT

(45) Veröffentlichungstag der Patentschrift: **03.04.91**

(21) Anmeldenummer: **87103480.7**

(22) Anmeldetag: **11.03.87**

(51) Int. Cl.⁵: **A01B 17/00**, A01B 49/02, A01B 49/06

(54) **Kurzpflug.**

(30) Priorität: **25.03.86 DE 3609968**

(43) Veröffentlichungstag der Anmeldung:
**30.09.87 Patentblatt 87/40**

(45) Bekanntmachung des Hinweises auf die
Patenterteilung:
**03.04.91 Patentblatt 91/14**

(84) Benannte Vertragsstaaten:
**BE DE ES FR GB IT NL SE**

(56) Entgegenhaltungen:
EP-A- 0 174 692          DE-A- 2 156 435
DE-A- 3 425 194          DE-A- 3 437 301
DE-B- 1 074 306          DE-B- 1 208 932
DE-B- 1 252 957          DE-C- 163 685
DE-C- 479 191            DE-C- 841 964
GB-A- 1 512 480          US-A- 2 041 519
US-A- 2 829 579          US-A- 2 877 857

(73) Patentinhaber: **Büttner, Hermann**
**Walkemühlenweg, 29**
**W-3400 Göttingen(DE)**

(72) Erfinder: **Büttner, Hermann**
**Walkemühlenweg, 29**
**W-3400 Göttingen(DE)**

(74) Vertreter: **Patentanwälte Dipl.-Ing. Rudolf Bi-**
**brach Dipl.-Ing. Elmar Rehberg**
**Pütterweg 6 Postfach 738**
**W-3400 Göttingen(DE)**

## Beschreibung

Die Erfindung geht von einem Kurzpflug mit den im Oberbegriff des Anspruchs 1 angegebenen Merkmalen aus. Solche Kurzpflüge weisen einen senkrecht zur Arbeitsrichtung angeordneten Pflugbalken auf, auf dem eine Mehrzahl von Pflugkörpern relativ dicht nebeneinander angeordnet sind.

Die US-A-2 829 579 zeigt einen Kurzpflug der eingangs beschriebenen Art mit zwei nebeneinander angeordneten Pflugkörpern, die an Scharstielen aufgehängt sind und mindestens ein Streichblech aufweisen. Um den Aufbau von Unkraut an der Vorderkante des Streichblechs und/oder den Scharstielen zu verhindern, ist eine Einrichtung vorgesehen, die für jeden Pflugkörper eine oder vorzugsweise mehrere Walzen aufweist, die auf ihrem Umfang mit federnd ausgebildeten Reinigungselementen besetzt sind. Die Walzen bzw. die Reinigungselemente sind der Kontur des Streichblechs angepaßt und so angeordnet, daß sie mit den Reinigungselementen in den Boden eindringen. Die Walzen werden damit indirekt durch den Boden angetrieben und dienen dazu, das Unkraut während des Pflügevorgangs am Boden festzuhalten, so daß es sich erst gar nicht an den Scharstielen aufbauen kann. Die Walzen mit den Reinigungselementen füllen den Raum entsprechend der Kontur des Streichblechs möglichst vollständig aus, so daß die Reinigungselemente bei ihrem Umlauf auch in unmittelbare Nähe zur Oberfläche des Streichblechs gelangen. Eine Säuberung der Vorderkante des Streichblechs oder des Scharstiels durch die Reinigungselemente findet damit jedoch nicht statt. Der Kurzpflug weist auch entsprechend der Anzahl der Pflugkörper vorgesehene Scheibenseche auf, die vor der Räumwalze angeordnet sind.

Aus der DE-C-163 685 ist eine Pflugbrust aus Blech bekannt, bei der die vordere Kante des Pflugkörpers zu einem falzartigen Wulst zusammengedrängt ist, um die Kante zu verstärken und infolge der wulstartigen Verstärkung ein Lüften der Landseite zu erreichen, indem nur der Wulst am Erdboden entlanggleitet. Die Anbringung dieser falzartigen Wulst ergibt auch eine Abrundung der Vorderkante des Pflugkörpers. Diese Vorderkante des Pflugkörpers kommt jedoch mit dem Erdboden nicht in Berührung, da die Pflugbrust üblicherweise dazu dient, auswechselbare Verschleißteile, wie insbesondere das Streichblech und das Schar, aufzunehmen. Diese Abrundung an der Pflugbrust hat somit keine technische Funktion, sie kommt weder mit dem Erdboden noch mit Unkraut 0. dgl. in Berührung.

Ein weiterer Kurzpflug ist aus der DE-A-34 37 301 bekannt. Vor den Pflugkörpern ist eine Räumwalze angeordnet, die mit Zinkenscheiben - etwa in Form von Kreissägeblättern - bestückt ist. Diese Zinkenscheiben sind jeweils dicht an der Vorderkante der Pflugkörper angeordnet. Sie rollen schräg taumelnd über den Boden, da sie federnd auf der Räumwalze aufgehängt sind. Die Zinkenscheiben haben die Aufgabe, Pflanzenrückstände in die Lücken zwischen den Pflugkörpern zu befördern. Bei Anhäufung von Pflanzenrückständen auf dem Acker besteht jedoch auch bei dem bekannten Kurzpflug die Neigung zu Verstopfungen an und zwischen den Pflugkörpern. Auf steinigen Böden verklemmen die Zinkenscheiben an den Vorderkanten der Pflugkörper, so daß sie nicht ordnungsgemäß arbeiten.

Um den zu pflügenden Erdbalken in vertikaler Richtung zu trennen, ist es aus der DE-A-18 13 113 bekannt, dem Pflugkörper einerseits eine Schneidschiene und andererseits ein Scheibensech zuzuordnen. Eine Reinigung des Pflugkörpers von Pflanzenrückständen findet durch dieses Scheibensech jedoch nicht statt, so daß auch hier die Neigung zu Verstopfungen an den Pflugkörpern nicht beseitigt ist.

Der Erfindung liegt die Aufgabe zugrunde, einen Kurzpflug dar eingangs beschriebenen Art so weiterzubilden, daß bei Anhäufungen von Pflanzenrückständen auf dem Acker die Neigung zu Verstopfungen an und zwischen den Pflugkörpern weitgehend beseitigt ist, und zwar trotz kurzer Bauweise des Pflugs mit dem senkrecht zur Arbeitsrichtung angeordneten Pflugbalken.

Erfindungsgemäß wird dies bei einem Kurzpflug der eingangs beschriebenen Art dadurch erreicht, daß das Streichblech eine gerundete Vorderkante aufweist, daß die Reinigungselemente an der gerundeten Vorderkante unter Kontakt oder mit geringem Abstand entlangstreichen, und daß die Scheibenseche gegen Federdruck ausweichbar gelagert sind.

Die Erfindung geht von der Erkenntnis aus, daß das Streichblech im Bereich seiner Vorderkante selbst gerundet ausgebildet sein muß oder jedenfalls mit einer Rundung versehen sein muß, die ggf. auch als vorgesehener Rundstab angeordnet sein kann. An einer solchen gerundeten Vorderkante haken sich Pflanzenreste in weit geringerem Maß fest als an einer scharfen Kante und es ist zusätzlich bei einer gerundeten Vorderkante leichter möglich, solche Pflanzenreste mit den Reinigungselementen abzunehmen. Wichtig ist auch, daß die zinkenförmig ausgebildeten Reinigungselemente der Räumwalze an der gerundeten Vorderkante unter Kontakt oder mit geringem Abstand hierzu entlangstreichen und mit dieser Vorderkante zusammenarbeiten. Diese zinkenförmigen Reinigungselemente müssen an sich mit dem Boden nicht in Berührung kommen; wesentlich ist nur ihre Zusammenarbeit mit der Vorderkante des Streichblechs. Die den Scharen zugeordneten Scheibenseche besorgen in an sich bekannter Weise den Vertikalschnitt und dienen dabei dazu, einen scholligen Bruch und eine ungleichmäßige Belastung der Zwischenräume zwischen den einzelnen Pflugkörpern zu verhindern. Außerdem zerschneiden die Scheibenseche Pflanzenrückstände zumindest bis zu gewissem Grad und erleichtern damit auch der Räumwalze bzw. den Reinigungselementen ihre Arbeit. Die Scheibenseche müssen ausweichbar gelagert sein, damit Steine und andere Hindernisse nicht zu einer Beschädigung der Scheibenseche führen können und trotz des Ausweichens eines Scheibensechs an einem Hindernis die Arbeit insgesamt nicht unterbrochen wird. Auch die zinkenartigen, federnden Reinigungselemente können einzeln ausweichen, so daß es nicht zu einer Einklemmung von Steinen zwischen dem Pflugkörper und den Reingungselementen kommt. Da die Reinigungselemente an sich nicht mit dem Boden zusammenarbeiten, also nicht auf dem Boden aufliegen, erfassen sie auch nicht die auf dem Boden liegenden Pflanzenteile, sondern nur solche Pflanzenteile, die sich auf der Vorderkante abgesetzt haben. Die Reinigungselemente arbeiten auch grundsätzlich anders als die im Syand der Technik bekannten Reinigungselemente, weil sie nicht die auf dem Boden liegengebliebenen Pflanzenreste erfassen, sonder nur diejenigen, die sich auf dem Pflugkörper aufgebaut haben. Insoweit unterliegen die Reinigungselemente auch einem verringerten Verschleiß. Ein Teil jedes Schares bildet eine Anlage.

Das Schar kann an seinem rückwärtigen Ende eine Schollenleitschiene aufweisen. Durch diese Schollenleitschiene, die am rückwärtigen Ende des eigenen Schars angeordnet ist, wird die universelle Anwendbarkeit des Kurzpflugs günstig beeinflußt. Der Kurzpflug kann somit für viele verschiedene Bodenarten und Zustände mit etwa gleich guten Ergebnis eingesetzt werden. Die Schollenleitschiene kann als in Arbeitsrichtung ausgerichteter, nach vorn zugespitzter und nach oben abgeschrägter Flachstahlkörper ausgebildet sein. Bei festen lehmigen Böden mit gewissem Feuchtigkeitsgehalt ist die Schollenleitschiene nicht erforderlich. Es gibt jedoch sehr viele Anwendungsfälle, wo diese Schollenleitschiene insoweit von Vorteil ist, weil sie das seitliche Abrutschen von solchen Erdbalken verhindert, die von dem hinteren Bereich des Schares geschnitten worden sind. Dies ist insbesondere bei sehr weichen Böden oder auch bei trockenen, kleinschollig brechenden Böden der Fall.

Die Räumwalze mit den zinkenförmigen Reinigungselementen kann höhenanpaßbar am Rahmen gelagert sein. Dies bedeutet, daß sich die Räumwalze auf ihre Arbeitshöhe im Verhältnis zum Pflugkörper frei einstellen kann. Zweckmäßig können Anschläge vorgesehen sein, die die Verschwenkbarkeit der Räumwalze nach unten begrenzen bzw. in der ausgehobenen Stellung verhindern. In der anderen Richtung ist die Räumwalze frei schwenkbar. Dies bedeutet auch eine Ausweichmöglichkeit beim Auftreten von Steinen und anderen Hindernissen.

Der Pflugkörper ist in spezieller Weise aufgebaut. Das Schar weist zweckmäßig eine Scharspitze, ein Vorderschar und ein Hinterschar auf; die Schollenleitschiene ist am Hinderschar befestigt und das Streichblech ist durch nachgeordnete Rückholfinger ergänzt. Auf diese Art und Weise können solche Teile, die einem vermehrten Verschleiß unterliegen, leicht ausgewechselt werden. Auch die Formgebung des Schars mit seinen drei Teilen vereinfacht sich. Die Rückholfinger, die auch mit dem Streichblech einstückig ausgebildet sein können, setzen die spiralige Form des Streichblechs nach hinten fort und begünstigen das Wenden des von dem Schar abgeschnittenen Erdbalkens. Außerdem verhindern diese Rückholfinger ein zu schnelles Abfließen des Erdbalkens in der von dem Streichblech vorgegebenen Richtung, also zur Wurfseite hin.

Die Rückholfinger können als gekrümmte Stahlstäbe ausgebildet sein, welche etwa in Fortsetzung der durch das Streichblech räumlich vorgegebenen Spirale angeordnet sind und an ihrem Beginn entgegengesetzt zur Arbeitsrichtung weisen und im oberen Teil zur Seite gekrümmt sind. Durch diese Formgebung wird auf die Handhabung des Erdbalkens während der Bewegung Einfluß genommen.

Die Scheibenseche können einzeln an Schwingen auf einem gemeinsamen Träger gelagert sein, über einzelne Federn gegen den Boden angepreßt werden, wobei der Träger zur Einstellung der Eindringtiefe schwenkbar um seine Achse gelagert ist. Es versteht sich, daß die Scheibenseche zum Pflugkörper ausgerichtet angeordnet sind, jedoch so, daß sie die Arbeit der zinkenförmigen Reinigungselemente nicht behindern. Auch das Scheibensech wirkt in gewisser Weise mit den zinkenförmigen Reinigungselementen zusammen. Wenn Pflanzenrückstände von den Reinigungselementen mitgenommen werden, können diese von dem Scheibensech abgeschnitten oder abgestreift werden.

Die Räumwalze mit den zinkenförmigen Reinigungselementen kann über einen Hydraulikmotor, eine Zapfwelle oder über auf dem Boden abrollende Räder angetrieben sein.

Die zinkenförmigen Reinigungselemente können als Federzinken ausgebildet sein, deren einer Schenkel zu einer Öse gebogen und mit der Reinigungswalze verbunden ist und deren anderer Schenkel einen langen Bogen bildet und an seinem freien Ende einen in Bewegungsrichtung schräg nach hinten gerichteten Haken aufweist, der rotierend die gerundete Vorderkante des Streiblechs hintergreift.

Für die Ausbildung der Räumwalze mit den zinkenförmigen Reinigungselementen bieten sich verschiedene Bauarten an. So kann die Räumwalze beispielsweise als starrer Rohrabschnitt ausgebildet sein, auf dem die zinkenförmigen Reinigungselemente über den Umfang verteilt angeordnet sind. Es ist aber auch möglich, die Räumwalze ähnlich wie einen Mähdrescherhaspel oder auch eine Aufnahmetrommel, wie sie z. B. an Strohpressen bekannt ist, auszubilden.

Der dem Pflugbalken tragende Teil des Rahmens kann mit dem die Krümelgeräte tragenden Teile des Rahmens federnd nachgiebig verbunden sein. Als Federn können Blattfedern in horizontaler und vertikaler Ausrichtung angeordnet werden. Wichtig ist, daß diese Federn geeignet sind, Torsionsmomente aufzunehmen bzw. zwischen dem hinteren und dem vorderen Teil des Rahmens zuzulassen. Durch diese federnd nachgiebige Ausbildung bzw. Verbindung sind die Krümelgeräte in der Lage, sich jeweils an den Boden und die Bodenverhältnisse anzupassen. Der Hauptvorteil liegt jedoch darin, daß der Rahmen insgesamt und insbesondere die Lagerung der Krümelgeräte schwächer dimensioniert werden können als bei einer starren Rahmenausbildung. Hierdurch tritt eine Material- und Gewichtsersparnis ein.

Ausführungsbeispiele der Erfindung sind in den Zeichnungen dargestellt. Es zeigen:

Figur 1   eine erste Ausführungsform des Kurzpflugs in Seitenansicht,

Figure 2   eine Draufsicht auf den Kurzpflug gemäß Figur 1,

Figur 3   eine perspektivische Darstellung des vorderen Teils des Kurzpflugs in einer weiteren Ausführungsform,

Figur 4   eine schematisierte Seitenansicht des Kurzpflugs in Anlehnung an Figur 3,

Figur 5   eine Draufsicht auf die Anordnung und Zuordnung der Teile im Bereich eines Pflugkörpers,

Figur 6   eine schematisierte Draufsicht auf den Kurzpflug gemäß den Figuren 3 bis 5, und

Figur 7   die federnde Lagerung des Scheibensechs.

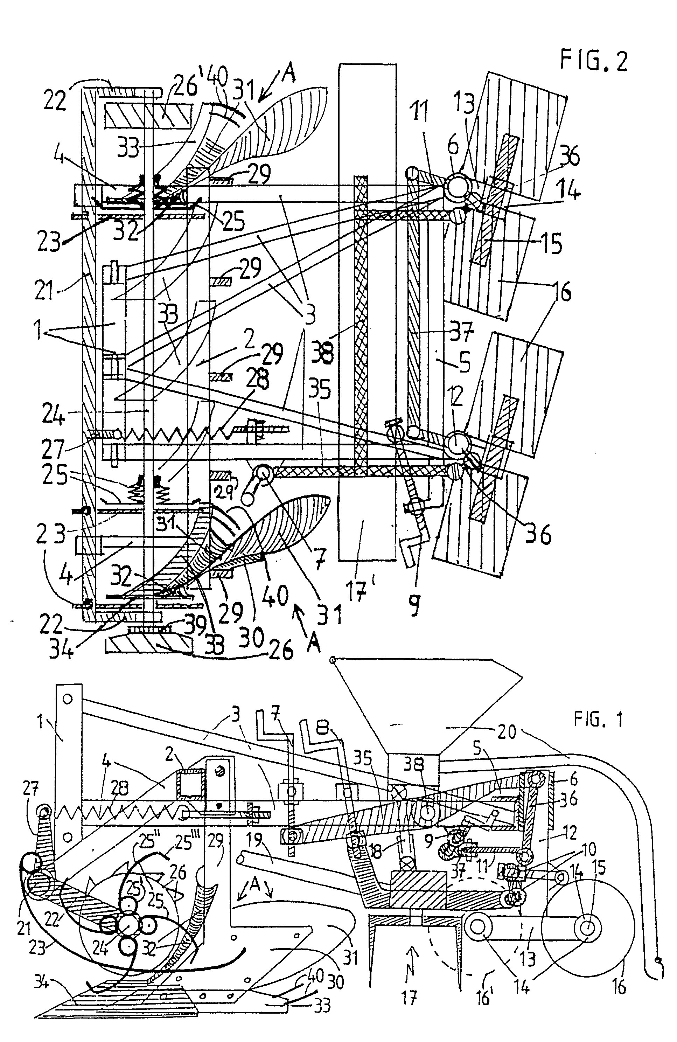

Der in den Figuren 1 und 2 dargestellte Kurzpflug weist einen aus mehreren Teilen bestehenden Rahmen 1, 2, 3, 4, 5 auf, wobei ein vorderer Teil 1 als Dreieckverstrebung ausgebildet ist und im übrigen zur Befestigung des Kurpflugs an einer Dreipunkthydraulik eines Schleppers dient. Im vorderen Bereich ist ein Pflugbalken 2 Bestandteil des Rahmens, der sich senkrecht zur Fahrt-bzw. Arbeitsrichtung erstreckt. Der vordere Teil weist nach hinten reichende Längsstreben 3 auf, über die ein hinterer Teil 5, der zur Lagerung von Krümelgeräten 16, insbesondere in Balkenform, dient, mit dem vorderen Teil 1 verbunden ist. Der hintere Teil 5 des Rahmens ist als Querträger ausgebildet und weist Lenkachsenlager 6 auf. Am vorderen Teil 1 sind Schwingenhalter 4 vorgesehen. Der Pflugbalken 2 dient zur Lagerung und Befestigung einer Mehrzahl von Pflugkörpern A, von denen in Figur 2 der Übersichtlichkeit halber nur zwei dargestellt sind. Die Befestigung der Pflugkörper A an dem Pflugbalken 2 erfolgt über Scharstiele 29. Mit diesen Scharstielen 29 ist ein besonders schmal und glattflächig gestalteter Rumpf 30 verbunden, an dem im unteren Bereich ein sichelförmig gestaltetes Schar 33 mit einer vorgezogenen Anlage 34 an der vorderen Spitze und einigen gebogen ausgebildeten Rückholfingern 40 angeordnet sind. Im oberen Bereich des Pflugkörpers A ist am Rumpf 30 ein Streichblech 31 befestigt, welches stark ballig bzw. spiralisch geformt ist und eine gerundete Vorderkante 32 aufweist, die dachrinnenförmig nach hinten umgebogen sein kann. Diese Vorderkante 32 folgt zumindest teilweise der Vorderkante des Streichblechs 31 bzw. ersetzt diese. Wie aus Figur 1 erkennbar ist, kann sich die Vorderkante 32 auch von dem Streichblech 31 entfernen und einen Teil des Scharstiels 29 schützend abdecken.

An den am Pflugbalken 2 nach vorn ragenden Schwingenhaltern 4 ist eine Schwingenachse 21 mit an deren Enden befestigten Schwingenarmen 22 drehbar gelagert. An den freien Enden der Schwingenarme 22 ist eine Räumwalze 24, 25 drehbar gelagert, die eine Welle 24 und daran befestigte zinkenförmige Reinigungselemente 25 aufweist, die in Form von Federzinken ausgebildet sein können. Der Antrieb der Welle 24 kann über Antriebsräder 26, 26' erfolgen, die auf dem Boden abrollen. Die Schwingenachse 21 kann über einen an ihr befestigten Schwingenhebel 27 von der Kraft einer Feder 28 belastet sein, die in ihrer Spannung einstellbar ausgebildet ist. Damit ist die Räumwalze 24, 25 einerseits anpaßbar und andererseits ausweichbar bei Hindernissen gelagert.

An der Schwingenachse 21 können außerdem Abstreifer 23 befestigt sein, die als kufenförmig gebogene, federnde Rundstahlstäbe ausgebildet sein können und jeweils dicht neben den Reinigungselementen 25 zur Wirkung kommen. Diese Abstreifer 23 sind insbesondere dann von Vorteil, wenn glitschige und klebrige Pflanzenrest auf dem Acker liegen, die von den Reinigungselementen 25 und/oder vom Pflugkörper nicht aufgenommen werden sollen.

In den Lenkachsenlagern 6 sind Lenkachsen 12 schwenkbar gelagert, an deren unterem Krümelwalzenhalter 13 vorgesehen sind. Die Krümelwalzenhalter 13 besitzen Lager 14, die vorzugsweise mit Wälzlagern ausgestattet sind und in denen Krümelwalzenachsen 15 der Krümelgeräte 16 drehbar sind. Diese Krümelgeräte 16 können zur Fahrtbzw. Arbeitsrichtung gerade oder auch schräg eingestellt werden. Hierzu dient eine Spindel 9, die über Lenkhebel 11 an den Lenkachsen 12 angreift. Die Lenkhebel 11 sind über eine Spurstange 37 gelenkig miteinander verbunden.

Die Einstellung der Arbeitstiefe der Pflugkörper A erfolgt über die Oberlenkereinstellung des Schleppers und durch eine Stellspindel 7, welche zwei durch eine am Rahmen gelagerte Kipphebelachse 38 verbundene Kipphebel 35 bewegt. Über zwei Gelenkstangen 36 werden die Lenkachsen 12 in der Höhe relativ zu den Lenkachsenlagern 6 verstellt, so daß auf diese Art und Weise die gewünschte Relativlage zum Rahmen festgestellt werden kann. Am unteren Teil der Lenkachsen 12 ist jeweils ein Exzenter 10 befestigt, der der Justierung dient. Damit kann die Krümeltiefeneinstellung einer Kreiselegge 17 eingestellt werden, indem eine Spindel 8 verdreht wird. Die Kreiselegge 17 kann über eine Antriebswelle 19 vom Schleper aus angetrieben werden. Die Kreiselegge 17 ist an den Exzentern 10 und der Spindel 8 an- und abbaubar gelagert. Anstelle der Kreiselegge 17 können auch andere Krümelgeräte angebaut werden, beispielsweise Zahnpackerwalzenkörper 16' (Figur 1).

An den Längsstreben 3 oder an anderer Stelle des Rahmens kann eine pneumatisch betriebene Sämaschine 20 angeordnet sein, die über eine Gelenkwelle 18 angetrieben wird, die ihrerseits getrieblich mit der Antriebswelle 19 verbunden ist.

Bei der Ausführungsform des Kurzpflugs der Figuren 1 und 2 sind im übrigen Scheibenseche vorgesehen, die der Übersichtlichkeit halber nicht dargestellt sind. Diese Scheibenseche sind den Pflugkörpern A zugeordnet und andererseits auch relativ zu der Räumwalze 24, 25 angeordnet.

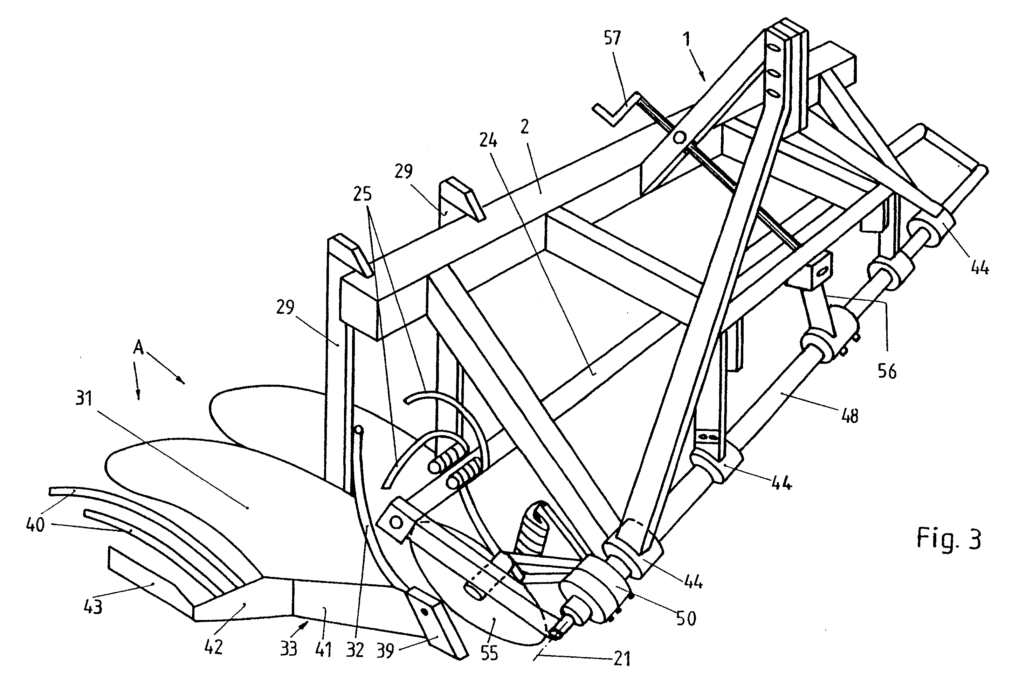

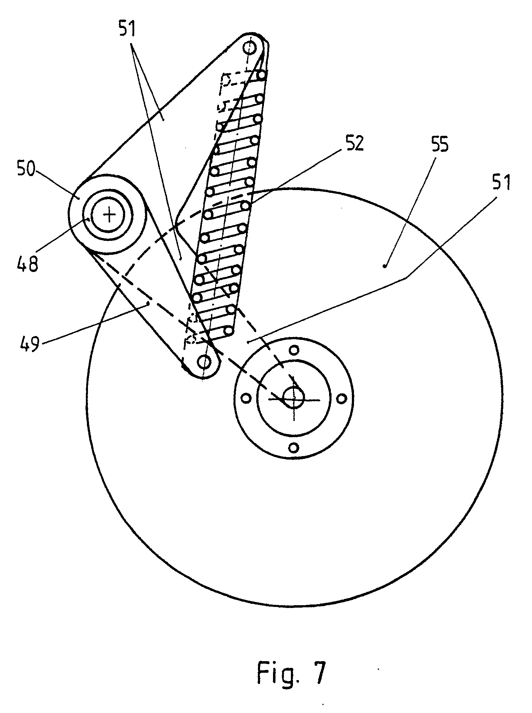

Eine weitere Ausführungsform des Kurzpflugs ist aus den Figuren 3 bis 8 ersichtlich, wobei auch diese Zeichnungen stark schematisiert sind.

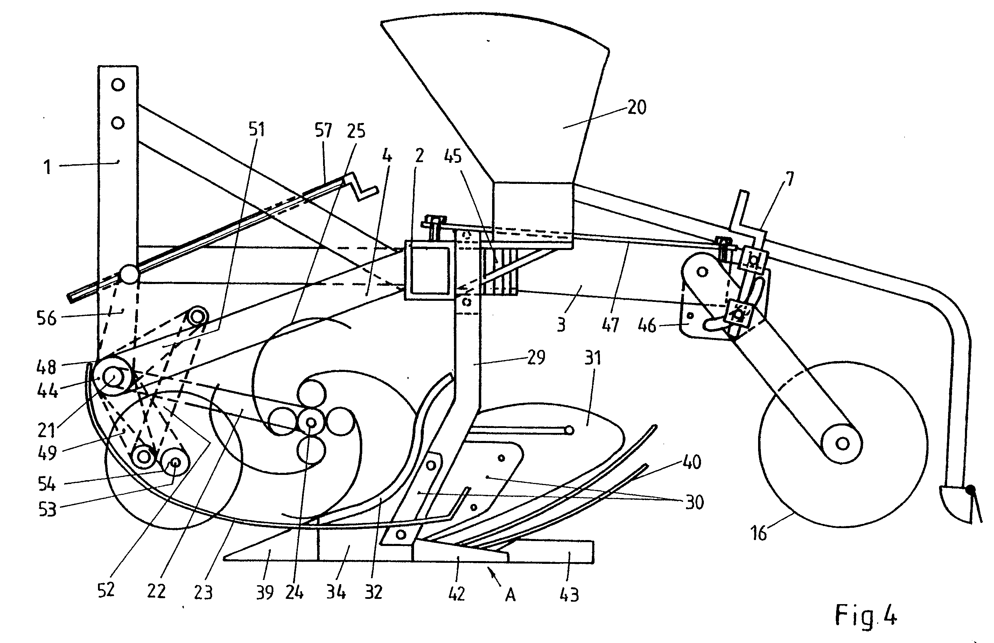

Figur 3 zeigt nur den vorderen Teil 1 des Kurzpflugs. An dem Pflugbalken 2 sind auch hier eine Mehrzahl von Pflugkörpern A, von denen nur zwei dargestellt sind, mit Abstand nebeneinander über die Scharstiele 29 befestigt. Jeder Pflugkörper A weist einen Rumpf 30 (Fig. 4) auf, an welchem alle anderen Teile des Pflugkörpers befestigt sind. Es ist eine vorgezogene Anlage 34 vorgesehen, an der eine separat auswechselbare Scharspitze 39 vorn vorgesehen ist. Oben am Rumpf 30 ist das spiralisch geformte Streichblech 31 angeordnet, dem wiederum die gerundete Vorderkante 32 zugeordnet ist. Diese Vorderkante 32 folgt zumindest teilweise dem Verlauf der Vorderkante des Streichblechs 31 oder kann auch einstückig mit diesem ausgebildet sein. Im unteren Bereich weist das Schar 33 im einzelnen ein Vorderschar 41 auf. Hinter diesem befindet sich ein Hinterschar 42, an welchem die Rückholfinger 40 befestigt sind. Die Rückholfinger 40 können gekrümmte Stahlstäbe sein, welche in etwa die durch das Streichblech 31 räumlich vorgegebene Spirale ergänzen. Sie können auch einstückig mit dem Streichblech 31 ausgebildet sein. Diese Rückholfinger 40 erstrecken sich in ihrem unteren Teil vorzugsweise in Fahrtrichtung und weisen im oberen Teil eine Krümmung auf, die zur Wurfseite des Streichblechs 31 hin gerichtet ist. Am Ende des Hinterschars 42 ist eine Schollenleitschiene 43 angebracht, die als ein parallel zur Fahrtrichtung ausgerichteter, nach vorn zugespitzter und nach oben abgeschrägter Flachstahl gestaltet sein kann. Durch diese Schollenleitschiene 43 wird erreicht, daß der Pflugkörper A für viele Bodenarten und Bodenzustände universal verwendbar ist. Durch das sichelförmige Schar 33 mit freistehendem Ende und den daran befestigten Rückholfingern 40 wird erreicht, daß der gepflügte Erdbalken weitgehend in seine eigene Furche zurückgewendet wird.

Der Rahmen 1, 2, 3, 4, 5 besteht auch hier aus einem vorderen Teil 1, 2 mit dem Pflugbalken 2. An diesem vorderen Teil 1, 2 sind vier ringförmige Lager 44 vorgesehen, die somit fest angeordnet sind. Nebenbei sei erwähnt, daß an dem Pflugbalken 2 oder einem anderen Teil des Rahmens auch eine Sämaschine 20 aufgesattelt sein kann.

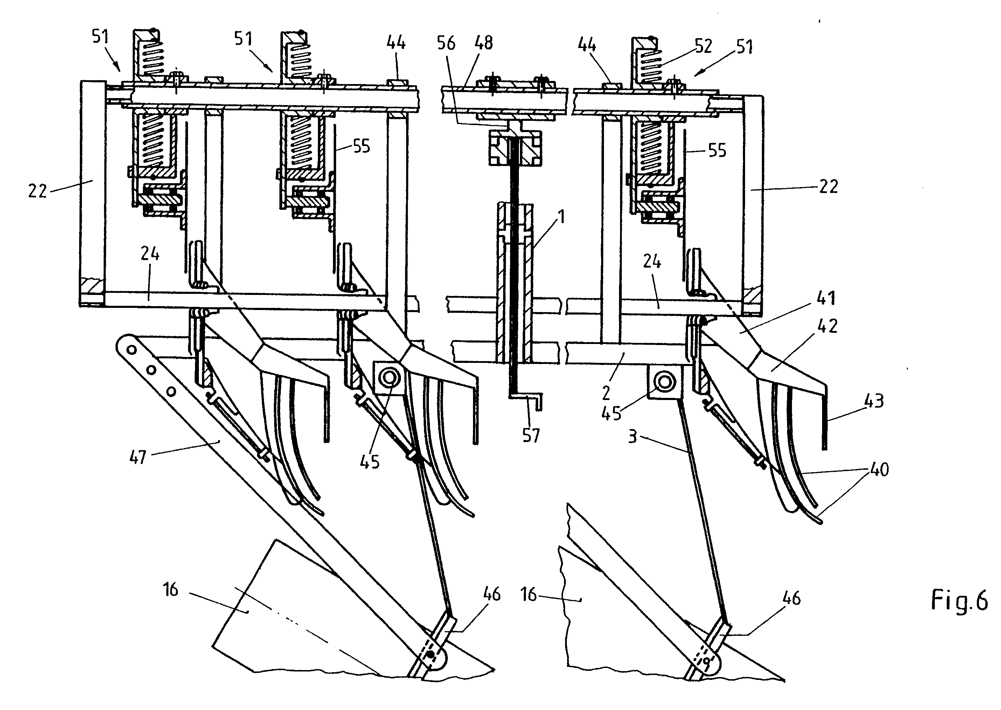

An dem Pflugbalken 2 können Längsstrebengelenke 45 (Figur 4) vorgesehen sein, an denen die Längsstreben 3 seitlich schwenkbar befestigt sind, die im übrigen als hochkant stehende Blattfedern ausgebildet sein können. An den Enden dieser Längsstreben 3 können Stellplatten 46 zur wahlweisen Anbringung von Krümelgeräten 16 vorgesehen sein. Über eine Schrägstrebe 47 (Figur 6) können die Krümelgeräte 16 relativ zu den übrigen Teilen des Kurzpflugs eingestellt werden. Mehrere Bohrungen in den Schrägstreben 47 ermöglichen durch Umstecken am Pflugbalken 2, den Winkel der Krümelgeräte 16 zur Fahrtrichtung zu ändern, was auch sinnvoll ist, um den Transport des Kurzpflugs auf der Straße zu ermöglichen. Über die Stellspindel 7 (Figur 4) kann die Arbeitstiefe der Pflugkörper A zu den Krümelgeräten 16 eingestellt werden. Außerdem erfüllen die Krümelgeräte 16 in der Ausbildung als Walzen durch ihren Schräglauf eine Eggenfunktion. In Verbindung mit einem eine Anlage aufweisenden Pflugkörper wird durch eine Schrägstellung der Walzen der Druck auf die Anlage gemindert.

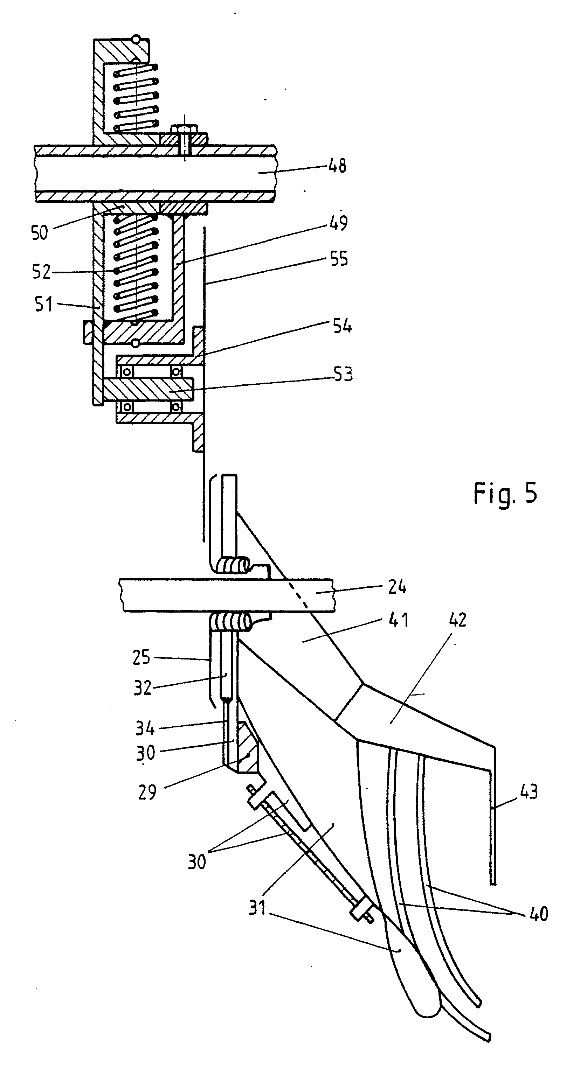

Wie insbesondere aus Figur 3 ersichtlich ist, ist in den Lagern 44 ein Sechträgerrohr 48 schwenkbar gelagert, an dem Federhebel 49 fest angeordnet sind. Neben diesen Federhebeln 49 sind über Schwingenlager 50 Sechschwingen 51 angeordnet. Diese sind mittels Arretierschrauben am seitlichen Verschieben gehindert. Eine an einem Zapfen des oberen Hebels der Sechschwinge 51 eingehängte Feder 52 (Figur 5) ist mit ihrem anderen Ende an einen Zapfen an dem Federhebel 49 eingehängt, dessen Verlängerung als Anschlag für den unteren Hebel der Sechschwinge 51 dient. Ein Lagerzapfen 53 am unteren Hebel der Sechschwinge 51 dient zur Aufnahme einer Nabe 54 mit einem daran befestigten Scheibensech 55. Durch eine an den Verwendungszweck angepaßte Dimensionierung der Feder 52 und der Hebellängen kann eine degressive Federung der Scheibenseche 55 erreicht werden. Dies bedeutet, daß eine relativ große Kraft, z. B. durch einen Stein im Boden, erforderlich ist, um das Scheibensech 55 aus einer Normalstellung heraus zu verschwenken; mit zunehmender Verschwenkung wird jedoch die auf das Scheibensech 55 einwirkende Kraft in senkrechter Richtung zunehmend geringer. Die Feder 52 und die verschiedenen Hebel sind so dimensioniert, daß die Sechschwingen 51 beim Pflügen in steinfreiem Boden starr am Sechträgerrohr 48 ruhen und folglich das Schwingenlager 50 minimalen Verschleiß aufweist. Etwa in der Mitte des Sechträgerrohres 48 ist ein Sechträgerrohrhebel 56 angeordnet und an seinem Ende gelenkig mit einer Sechspindel 57 in Wirkverbindung, die andererseits gelenkig an dem vorderen Teil 1 des Rahmens angreift (Figur 3). Durch Drehen dieser Sechspindel 57 können sämtliche Scheibenseche 55 gleichzeitig in ihrer Arbeitstiefe eingestellt werden.

Auch die Ausführungsform des Kurzpflugs in den Figuren 3 bis 7 weist eine Räumwalze 24, 25 auf, die eine Welle 24 und federnde Reinigungselemente 25 besitzt. Die Reinigungselemente 25 arbeiten mit der gerundeten Vorderkante 32 des Streichblechs 31 zusammen, und zwar entweder in direktem Kontakt oder sie streifen unmittelbar an der Vorderkante 32 vorbei. Auf jeden Fall ist die Ausbildung so gewählt, daß Pflanzenteile laufend von der Vorderkante 32 entfernt werden, so daß sich solche Pflanzenteile dort nicht aufbauen können. Verstopfungen werden somit vermieden. Die Schwingenachse 21 ist in dem Sechträgerrohr 48 begrenzt schwenkbar gelagert. Zur Ausbildung der Lager können an beiden Enden Kunststoffbuchsen in das Sechträgerrohr 48 eingesetzt werden.

**Ansprüche**

1. Kurzpflug mit einem Rahmen und einem senkrecht zur Arbeitsrichtung angeordneten Pflugbalken (2), auf dem nebeneinander eine Mehrzahl von Pflugkörpern (A) angeordnet sind, die zumindest ein Schar (33) und ein Streichblech (31) aufweisen, mit einer vor den Pflugkörpern angeordneten angetriebenen Räumwalze (24, 25), wobei die Räumwalze (24, 25) zinkenförmige, federnde Reinigungselemente (25) trägt und den Scharen (33) Scheibenseche (55) zugeordnet sind, die vor der Räumwalze (24, 25) angeordnet und den Pflugkörpern (A) zugeordnet sind, dadurch gekennzeichnet, daß das Streichblech (31) eine gerundete Vorderkante (32) aufweist, daß die Reinigungselemente (25) an der gerundeten Vorderkante (32) unter Kontakt oder mit geringem Abstand entlangstreichen, und daß die Scheibenseche (55) gegen Federdruck ausweichbar gelagert sind.

2. Kurzpflug nach Anspruch 1, dadurch gekennzeichnet, daß das Schar (33) an seinem rückwärtigen Ende eine Schollenleitschiene (43) aufweist.

3. Kurzpflug nach Anspruch 1, dadurch gekennzeichnet, daß die Schollenleitschiene (43) als in Arbeitsrichtung ausgerichteter, nach vorn zugespitzter und nach oben abgeschrägter Flachstahlkörper ausgebildet ist.

4. Kurzpflug nach Anspruch 1, dadurch gekennzeichnet, daß die Räumwalze (24, 25) mit den zinkenförmigen Reinigungselementen (25) höhenanpaßbar am Rahmen gelagert ist.

5. Kurzpflug nach Anspruch 1, dadurch gekennzeichnet, daß das Schar (33) eine Scharspitze (39), ein VorderSchar (41) und ein Hinterschar (42) aufweist, daß die Schollenleitschiene (43) am Hinterschar (42) befestigt ist, und daß das Streichblech (31) durch nachgeordnete Rückholfinger (40) ergänzt ist.

6. Kurzpflug nach Anspruch 5, dadurch gekennzeichnet, daß die Rückholfinger (40) als gekrümmte Stahlstäbe ausgebildet sind, welche etwa in Fortsetzung der durch das Streichblech (31) räumlich vorgegebenen Spirale angeordnet sind und an ihrem Beginn entgegengesetzt zur Arbeitsrichtung weisen und im oberen Teil zur Seite gekrümmt sind.

7. Kurzpflug nach Anspruch 1, dadurch gekennzeichnet, daß die Scheibenseche (55) einzeln an Schwingen an einem gemeinsamen Träger gelagert ist, über einzelne Federn (52) gegen den Boden angepreßt werden, und daß der Träger zur Einstellung der Eindringtiefe schwenkbar um seine Achse gelagert ist.

8. Kurzpflug nach Anspruch 1, dadurch gekennzeichnet, daß die Räumwalze (24, 25) mit den zinkenförmigen Reinigungselementen (25) über einen Hydraulikmotor, eine Zapfwelle oder über den Boden abrollende Räder (26) angetrieben ist.

9. Kurzpflug nach Anspruch 1, dadurch gekennzeichnet, daß die zinkenförmigen Reingungselemente (25) als Federzinken ausgebildet sind, deren einer Schenkel zu einer Öse gebogen und mit der Welle (24) der Räumwalze verbunden ist, und deren anderer Schenkel einen langen Bogen bildet und an seinem freien Ende einen in Bewegungsrichtung schräg nach hinten gerichteten Haken aufweist, der rotierend die gerundete Vorderkante (32) des Steichblechs (31) hintergreift.

10. Kurzpflug nach Anspruch 1, dadurch gekennzeichnet, daß der den Pflugbalken (2) tragende Teil (1, 2) des Rahmens mit dem die Krümelgeräte (16) tragenden Teil (5) des Rahmens federnd nachgiebig verbunden ist.

## Claims

1. Short plough with a frame and a plough beam (2) which is disposed at right angles to the working direction and on which are disposed next to each other a plurality of plough bodies (A) having at least a share (33) and a mould board (31), with a driven clearing roller (24, 25) disposed in front of the plough bodies, the clearing roller (24, 25) bearing tine-shaped, resilient cleaning elements (25), and disc coulters (55) being assigned to the shares (33), said coulters being disposed in front of the clearing roller (24, 25) and assigned to the plough bodies (A), characterised in that the mould board (31) has a rounded front edge (32), in that the cleaning elements (25) brush along the rounded front edge (32) making contact or with a slight space, and in that the disc coulters (55) are mounted so that they can deflect against spring pressure.

2. Short plough according to Claim 1, characterised in that the share (33) has a clod guide rail (43) at its rear end.

3. Short plough according to Claim 1, characterised in that the clod guide rail (43) is in the form of a forward-tapering, upward-bevelled flat steel body running in the working direction.

4. Short plough according to Claim 1, characterised in that the clearing roller (24, 25) with the tine-shaped cleaning elements (25) is mounted on the frame so that the height can be adjusted.

5. Short plough according to Claim 1, characterised in that the share (33) has a share tip (39), a front share (41) and a rear share (42), in that the clod guide rail (43) is fixed on the rear share (42), and in that she mould board (31) is completed by return fingers (40) provided behind it.

6. Short plough according to Claim 5, characterised in that the return fingers (40) are in the form of curved steel bars which are disposed, for example, as a continuation of the spiral spatially determined by the mould board (31) and at their beginning point in the opposite direction to the working direction, and in the upper pact are curved to the side.

7. Short plough according to Claim 1, characterised in that the disc coulters (55) are mounted individually on rockers on a common support, and are pressed by means of individual springs (52) against the ground, and in that the support is mounted so that it can swing about its axis in order to sat the penetration depth.

8. Short plough according to Claim 1, characterised in that the clearing roller (24, 25) with the tine-shaped cleaning elements (25) is driven by means of a hydraulic motor, a power take-off shaft, or by means of wheels (26) rolling along the ground.

9. Short plough according to Claim 1, characterised in that the tine-shaped cleaning elements (25) are in the form of spring tines, whose one leg is bent into an eye and connected to the shaft (24) of the clearing roller, and whose other leg forms a long curve and at its free and has a hook slanting backwards in the direction of movement, which hook when rotating engages behind the rounded front edge (32) of the mould board (31).

10. Short plough according to Claim 1, characterised in that the part (1, 2) of the frame bearing the plough beam (2) is connected in a spring-loaded elastic manner to the part (5) of the frame bearing the clod breakers (16).

## Revendications

1. Charrue compacte avec un chassis et une flèche de charrue (2) disposée perpendiculairement au sens de travail, sur laquelle sont disposés une pluralité de corps de charrue (A) qui présentent au moins un soc (33) et un versoir (31), avec un rouleau déblayeur (24, 25) entraîné, disposé en avant des corps de charrue, le rouleau déblayeur (24, 25) portant des éléments nettoyeurs élastiques (25) et des coutres à disques (55) étant associés aux socs (33) et étant disposés en avant du rouleau déblayeur (24, 25) et associés aux corps de charrue (A), **caractérisée** en ce que le versoir (31) présente un bord antérieur arrondi (32), en ce que les éléments nettoyeurs (25) passent le long du bord antérieur arrondi (32) en contact avec lui ou à faible distance, et en ce que les coutres à disques (55) sont montés de manière à pouvoir s'écarter contre la pression d'un ressort.

2. Charrue compacte selon la revendication 1, caractérisée en ce que le soc (33) présente sur son extrémité postérieure une barre (43) de guidage des mottes de terre.

3. Charrue compacte selon la revendication 1, caractérisée en ce que la barre (43) de guidage des mottes est sous la forme d'un corps en acier plat dirigé dans le sens de travail, avec une pointe dirigée vers l'avant, ce corps étant biseauté vers le haut.

4. Charrue compacte selon la revendication 1, caractérisée en ce que le rouleau déblayeur (24, 25) avec les éléments nettoyeurs (25) en forme de dents est monté réglable en hauteur sur le chassis.

5. Charrue compacte selon la revendication 1, caractérisée en ce que le soc (33) présente une pointe de soc (39), un soc antérieur (41) et un soc postérieur (42), en ce que la barre (43) de guidage des mottes est fixée au soc postérieur (43) et en ce que le versoir (31) est complété par des doigts de rejet (40) subordonnés.

6. Charrue compacte selon la revendication 5, caractérisée en ce que les doigts de rejet (40) sont sous la forme de barres en acier incurvées qui sont disposées à peu près dans le prolongement de la spirale prédéterminée dans l'espace par le versoir (31) et qui, à leur commencement, sont dirigées en sens opposé au sens de travail et sont, dans leur partie supérieure, incurvées vers le côté.

7. Charrue compacte selon la revendication 1, caractérisée en ce que les coutres à disques (55) sont montés individuellement sur des bras oscillants sur un support commun, sont poussés contre le sol par des ressorts (52) individuels, et en ce que le support est monté de manière pivotante autour de son propre axe, pour le réglage de la profondeur de pénétration.

8. Charrue compacte selon la revendication 1, caractérisée en ce que le rouleau déblayeur (24, 25) avec les éléments nettoyeurs (25) en forme de dents est entraîné par un moteur hydraulique, par un arbre de prise de force, ou par des roues (26) roulant sur le sol.

9. Charrue compacte selon la revendication 1, caractérisée en ce que les éléments nettoyeurs (25) en forme de dents sont sous la forme de dents élastiques dont une branche est enroulée en formant un oeillet et est liée à l'arbre (24) du rouleau déblayeur, et dont l'autre branche forme un arc allongé et présente, sur son extrémité libre, un crochet dirigé obliquement vers l'arrière dans le sens de mouvement, qui en tournant agit par derrière sur le bord antérieur arrondi (32) du versoir (31).

10. Charrue compacte selon la revendication 1, caractérisée en ce que la partie (1 , 2) du chassis portant la flèche de charrue (2) est reliée de manière à pouvoir céder élastiquement avec la partie (5) du chassis portant les dispositifs émietteurs (16).

FIG. 2

FIG. 1

Fig. 3

Fig. 4

EP 0 238 935 B1

Fig. 5

Fig. 6

EP 0 238 935 B1

Fig. 7